Europäisches Patentamt

European Patent Office

Office européen des brevets

(19)

(11) Veröffentlichungsnummer: **0 152 599**
A2

# (12) EUROPÄISCHE PATENTANMELDUNG

(21) Anmeldenummer: 84115509.6

(22) Anmeldetag: 15.12.84

(51) Int. Cl.⁴: **B 01 J 2/22**, B 01 J 37/00

(30) Priorität: 21.02.84 DE 3406185

(43) Veröffentlichungstag der Anmeldung: 28.08.85
Patentblatt 85/35

(84) Benannte Vertragsstaaten: **AT BE CH DE FR GB IT LI NL SE**

(71) Anmelder: **Degussa Aktiengesellschaft,
Weissfrauenstrasse 9, D-6000 Frankfurt am Main 1 (DE)**

(72) Erfinder: **Ettlinger, Manfred, Dr., Stifterstrasse 22,
D-8757 Karlstein (DE)**
Erfinder: **Simon, Edgar, Bergstrasse 24,
D-6463 Freigericht 5 (DE)**
Erfinder: **Heinemann, Wolfgang, Dr.,
Stresemannstrasse 9, D-6450 Hanau (DE)**

(54) Verfahren zur Herstellung von Presslingen aus pyrogen hergestellten Oxiden.

(57) Preßlinge aus pyrogenen Oxiden werden hergestellt, indem man eine Mischung, bestehend aus pyrogenem Oxid, Glasurfrittenpulver, Wasser und Gleitmittel homogenisiert, verpreßt und tempert.

Vorteilhafterweise lassen sich pyrogen hergestellte Oxide aus der Gruppe $SiO_2$, $ZrO_2$ und/oder $Al_2O_3$ verpressen.

EP 0 152 599 A2

84 115 FH

Degussa Aktiengesellschaft
D-6000 Frankfurt am Main 1

Verfahren zur Herstellung von Preßlingen aus pyrogen hergestellten Oxiden

Pyrogen hergestellte Oxide zeichnen sich durch extreme Feinteiligkeit und entsprechend hohe spezifische Oberflächen, sehr hohe Reinheit, sphärische Teilchenform und das Fehlen von Poren aus. Aufgrund dieser Eigenschaften finden die pyrogen hergestellten Oxide zunehmend Interesse als Träger für Katalysatoren (D. Koth, H. Ferch, Chem. Ing. Techn. 52, 628 (1980).

Da pyrogen hergestellte Oxide besonders feinteilig sind, bereitet die Tablettierung zu Katalysatorträgern einige Schwierigkeiten.

Aus der DE-OS 31 32 674 ist ein Verfahren zur Herstellung von Preßlingen bekannt, in dem Kieselsol als Bindemittel verwendet wird.

Aus der DE-OS 32 17 751 ist die Verpressung von pyrogen hergestelltem Titandioxid bekannt, bei welchem organische Säuren oder sauer reagierende Salze als intermediäre Bindemittel verwendet werden.

01 84 115 FH

- 2 -

Auf andere pyrogen hergestellte Oxide, wie z.B. $SiO_2$, $ZrO_2$, $Al_2O_3$, kann dieses Verfahren jedoch nicht übertragen werden.

Gegenstand der Erfindung ist ein Verfahren zur Herstellung von Preßlingen aus pyrogen hergestellten Oxiden, welches dadurch gekennzeichnet ist, daß man eine Mischung, bestehend aus pyrogenem Oxid, Glasurfrittenpulver, Wasser und Gleitmittel homogenisiert, verpreßt und tempert.

Vorteilhafterweise können mit dem erfindungsgemäßen Verfahren pyrogen hergestellte Oxide aus der Gruppe $SiO_2$, $ZrO_2$ und/oder $Al_2O_3$ verpreßt werden. Besonders vorteilhaft läßt sich pyrogen hergestelltes $SiO_2$ zu hochbruchfesten Preßlingen verpressen.

In einer Ausführungsform der Erfindung kann man eine Feststoffmischung, bestehend aus 85 bis 10 Teilen pyrogenem Oxid und 15 bis 90 Teilen Glasurfrittenpulver gemeinsam im Gemisch mit 200 bis 50 Gew.-% Wasser (bezogen auf die Feststoffmischung) und 10 bis 40 Gew.-% Gleitmittel, vorzugsweise Glyzerin (bezogen auf die Feststoffmenge), unter verdichtenden Bedingungen über einen Zeitraum von 1 bis 60 Minuten, vorzugsweise 1 bis 10 Minuten, mit z.B. einem Kollergang, einer Kugelmühle oder einer Walze, homogenisieren, das so erhaltene Granulat trocknen, bis man eine für die Verpressung ausreichende Fließfähigkeit erhält, dieses Granulat z.B. mit bekannten Stempelpressen, wie Exzenterpresse oder Rundlaufpresse verpressen und die so erhaltenen Preßlinge bei 600 bis 850°C, vorzugsweise bei 700 bis 800°C, während einer Zeit von 30 bis 120 Minuten tempern.

84 115 FH

- 3 -

Als Bindemittel werden erfindungsgemäß Glasurpulver verwendet, wie sie z.B. zur Herstellung von Schlickern zur Beschichtung von Keramikplatten verwendet werden (siehe Ullmanns Enzyklopädie der technischen Chemie, Band 13, S. 711 Keramik, 4. Auflage, Verlag Chemie Weinheim). Diese Pulver haben Korngrößen von weniger als 50 µm. Die Zusammensetzung kann sehr weit variieren.

Diese Glasurpulver oder Glasurfrittenpulver können die Elemente Silizium, Aluminium, Bor, Natrium, Kalium, Lithium, Calcium, Zink, Barium, Blei, Vanadium und/oder Chrom - meist in Form ihrer Oxide - enthalten. Da die herzustellenden Presslinge als Katalysatorträger verwendet werden sollen, sind Glasurpulver auszuwählen, die für diese Zwecke keine störenden Elemente enthalten.

Das erfindungsgemäße Verfahren weist den Vorteil auf, daß es die Herstellung von Preßlingen aus pyrogen hergestelltem Siliciumdioxid, die eine hohe Festigkeit aufweisen, erlaubt.

Beispiele

Die Bruchfestigkeit der Tabletten wird mit einem Bruchfestigkeitstester des Typs ZE/205 der Firma Dr.K.Schleuninger & Co. gemessen. Dabei werden 10 Tabletten gebrochen und ihr Mittelwert errechnet.

Das Porenvolumen der Preßlinge wird auf einfache Weise bestimmt, indem man die Preßlinge in einem Glas bei Zimmertemperatur so lange Wasser aufnehmen läßt, bis keine Luftblasen mehr aufsteigen. Anschließend werden die Preßlinge aus dem Wasser genommen, an der Oberfläche mit einem Papier ab-

84 115 FH

- 4 -

getrocknet und gewogen. Aus der Differenz zwischen dem Gewicht vor und nach der Wasserabsorption ergibt sich die Menge des absorbierten Wassers und damit das Porenvolumen der Preßlinge, das jeweils als Teil des Preßlingsvolumens in den Beispielen aufgeführt wird.

Die Messung der spezifischen Oberflächen der Presslinge erfolgt nach der BET-Methode (DIN 66 131) (J.Am.Chem.Soc. 60 (1983) 309).

Das angegebene Aerosil® 150 ist eine pyrogen hergestellte Kieselsäure mit einer spezifischen Oberfläche von ca. 150 m²/g.
Das angegebene Aerosil® 300 ist eine pyrogen hergestellte Kieselsäure mit einer spezifischen Oberflächen von ca. 300 m²/g.

Beispiel I

30 g AEROSIL® 150 (spezifische Oberfläche 145 m²/g), 6 g Glyzerin in 35 g Wasser und 7 g Glasurpulver (Fritte 1 = 17,7 % $TiO_2$, 4 % $(NH_4)_3VO_4$, 31,7 % $SiO_2$, 27,8 % $PbO$, 8,9 % $B_2O_3$, 2,5 % $CuO$, 2,5 % $Na_2O$) wurden in eine Retsch-Mühle gegeben und 5 Minuten homogenisiert. Die erhaltene Mischung reibt man durch ein 1,5 mm Sieb und trocknet das Granulat bis eine für die Tablettenmaschine ausreichende Fließfähigkeit gegeben ist bei 110°C.

Die Verpressung erfolgt auf einer Korsch-Exzenterpresse (ca. 1.200 bar). Die anschließende Temperung wird 90 Minuten bei 700°C durchgeführt.

01 84 115 FH

- 5 -

| Tablettengröße | : | 9 mm Ø, 6 mm Höhe |
| Spezifische Oberfläche | : | 85 m²/g |
| Mittlere Bruchfestigkeit | : | 16 kp |
| Mittleres Porenvolumen | : | 0,42 ml/ml |

### Beispiel II

30 g AEROSIL® 150 (spezifische Oberfläche 145 m²/g), 6 g Glyzerin in 35 g Wasser und 8 g Glasurpulver (Fritte 2 = 54,9 % $SiO_2$, 19,5 % CaO, 11,0 % $Al_2O_3$, 6,9 $B_2O_3$, 4,7 % $Na_2O$, 1,5 MgO, 0,6 ZnO, 0,6 % $K_2O$) werden wie in Beispiel I angegeben vermischt, homogenisiert, verpreßt und getempert.

| Tablettengröße | : | 9 mm Ø, 6 mm Höhe |
| Spezifische Oberfläche | : | 101 m²/g |
| Mittlere Bruchfestigkeit | : | 10 kp |
| Mittleres Porenvolumen | : | 0,54 ml/ml |

### Beispiel III

30 g AEROSIL® 300 (spezifische Oberfläche 310 m²/g), 6 g Glyzerin in 45 g Wasser und 8 g Glasurpulver (Fritte 2) werden wie in Beispiel I angegeben vermischt, homogenisiert, verpreßt und getempert.

| Tablettengröße | : | 9 mm Ø, 6 mm Höhe |
| Spezifische Oberfläche | : | 181 m²/g |
| Mittlere Bruchfestigkeit | : | 8 kp |
| Mittleres Porenvolumen | : | 0,40 ml/ml |

### Beispiel IV

30 g pyrogen hergestelltes Aluminiumoxid (spezifische Oberfläche 101 m²/g), 6 g Glyzerin in 15 g Wasser und 8 g Glasurpul-

01 84 115 FH

— 6 —

ver (Fritte 2) werden wie in Beispiel I angegeben vermischt, homogenisiert, verpreßt und getempert.

| Tablettengröße | : | 9 mm Ø, 6 mm Höhe |
|---|---|---|
| Spezifische Oberfläche | : | 75 m²/g |
| Mittlere Bruchfestigkeit | : | 20 kp |
| Mittleres Porenvolumen | : | 0,42 ml/ml |

### Beispiel V

30 g AEROSIL$^R$ 150 (spezifische Oberfläche 145 m²/g), 6 g Glyzerin in 34 g Wasser und 8 g Glasurpulver (Fritte 3 = 47,8 $SiO_2$, 14,0 $B_2O_3$, 12,1 $ZrO_2$, 7,2 $Al_2O_3$, 6,8 CaO, 6,0 ZnO, 4,5 $Na_2O$, 1,6 $K_2O$) werden wie in Beispiel I angegeben vermischt, homogenisiert, verpreßt und 90 Minuten bei 800°C getempert.

| Tablettengröße | : | 9 mm Ø, 5 mm Höhe |
|---|---|---|
| Spezifische Oberfläche | : | 111 m²/g |
| Mittlere Bruchfestigkeit | : | 10 kp |
| Mittleres Porenvolumen | : | 0,53 ml/ml |

### Beispiel VI

30 g pyrogenes Zirkonoxid (spezifische Oberfläche 53 m²/g), 6 g Glycerin in 10 g Wasser und 8 g Glaspulver (Fritte 2) werden wie in Beispiel I angegeben vermischt, homogenisiert, verpreßt und getempert.

| Tablettengröße | : | 9 mm Ø, 5 mm Höhe |
|---|---|---|
| Spezifische Oberfläche | : | 27 m²/g |
| Mittlere Bruchfestigkeit | : | 20 kp |
| Mittleres Porenvolumen | : | 0,33 ml/ml |

01 84 115 FH

- 1 -

Degussa Aktiengesellschaft
D-6000 Frankfurt am Main 1

Verfahren zur Herstellung von Presslingen aus pyrogen hergestellten Oxiden

Patentansprüche

1. Verfahren zur Herstellung von Preßlingen aus pyrogen
hergestellten Oxiden, dadurch gekennzeichnet, daß man
eine Mischung, bestehend aus pyrogenem Oxid, Glasurfrittenpulver, Wasser und Gleitmittel homogenisiert,
verpreßt und tempert.

2. Verfahren nach Anspruch 1, dadurch gekennzeichnet, daß
man eine Feststoffmischung, bestehend aus 85 bis 10 Teilen pyrogenem Oxid und 15 bis 90 Teilen Glasurfrittenpulver gemeinsam im Gemisch mit 200 bis 50 Gew.-% Wasser (bezogen auf die Feststoffmischung) und 10 bis 40
Gew.-% Gleitmittel (bezogen auf die Feststoffmischung)
unter verdichtenden Bedingungen über einen Zeitraum von
1 bis 60 Minuten homogenisiert, die erhaltene Mischung
durch ein Sieb drückt, das so erhaltene Granulat trocknet, bis man eine für die Verpressung ausreichende
Fließfähigkeit erhält, dieses Granulat verpreßt und
die so erhaltenen Preßlinge bei 600 bis 850°C während
einer Zeit von 30 bis 120 Minuten tempert.